# DEMANDE DE BREVET EUROPEEN

(11) **EP 1 300 674 A1**
(43) Date de publication de la demande: **09.04.2003**
(21) Numéro de dépôt: 02292429.4
(22) Date de dépôt: 03.10.2002
(51) Int. Cl.: G01N 21/64, G01N 21/77

(54) **Capteur de fluorescence**

(30) Priorité: 05.10.2001 FR 0112852
(71) Demandeur: Humbert, Philippe Gérard Lucien, 25290 Ornans (FR); Gharbi, Tijani, 25000 Besancon (FR); Bonnans, Vincent, 25000 Besancon (FR); Pieralli, Christian, 25000 Besançon (FR); Wacogne, Bruno, 70190 Traitie Fontaine (FR)
(72) Inventeur: Humbert, Philipe Gérard Lucien, 25290 Ornans (FR); Gharbi, Tijani, 25000 Besançon (FR); Bonnans, Vincent, 25000 Besançon (FR); Pieralli, Christian, 25000 Besançon (FR); Wacogne, Bruno, 70190 Traitie Fontaine (FR)
(74) Mandataire: Garel, Régis

(57) **Abrégé**

Capteur de fluorescence comprenant au moins une fibre optique d'excitation (3) pour transmettre une lumière d'excitation sur une cible (8) appropriée, et au moins une fibre optique de réception (2) pour recevoir un rayonnement de fluorescence émis par la cible irradiée. Un système optique (7) présentant des aberrations chromatiques est disposé devant l'extrémité de sortie (32) de la fibre optique d'excitation (3) et l'extrémité d'entrée (22) de la fibre optique de réception (2) pour optimiser simultanément une focalisation de la lumière d'excitation sur la cible (8) et la réception du rayonnement de fluorescence par la fibre optique de réception (2).

## Description

La présente invention se rapporte à un capteur de fluorescence destiné à permettre l'examen d'une cible appropriée telle qu'un tissu organique entrant en fluorescence lorsqu'il est irradié par une lumière d'excitation.

Plus particulièrement, l'invention vise, parmi ces capteurs de fluorescence, ceux qui comprennent :
- au moins une fibre optique d'excitation pour transmettre une lumière d'excitation produite par une source lumineuse afin d'exciter la fluorescence d'une cible appropriée, ladite fibre optique d'excitation comprenant une extrémité de sortie qui présente un certain axe optique et qui est solidaire d'un premier support, et
- au moins une fibre optique de réception pour recevoir un rayonnement de fluorescence émis par la cible irradiée, ladite fibre optique de réception comprenant une extrémité d'entrée qui présente un axe optique parallèle à l'axe optique de l'extrémité de sortie de la fibre optique d'excitation et qui est solidaire dudit premier support.

De tels capteurs de fluorescence pour l'examen de tissus organiques ont été divulgués notamment dans le brevet US 4 768 513.

Le principe de base de la détection optique par fluorescence repose sur le fait que certaines molécules contenues dans les tissus organiques sont susceptibles d'émettre un rayonnement fluorescent lorsqu'elles sont irradiées et excitées par une lumière d'excitation de longueur d'onde spécifique et appropriée.

Ainsi, suivant le type de molécules et plus généralement de cellules organiques à détecter, la longueur d'onde de la lumière d'excitation sera déterminée afin que les molécules entrent en fluorescence en émettant ainsi un rayonnement de fluorescence qui sera récupéré par la fibre optique de réception avant d'être analysé, par exemple, à l'aide d'un transducteur photoélectrique.

Etant donné que des types de tissus différents donnent une fluorescence fortement différente, on peut différencier ainsi les différents tissus et reconnaître par exemple des tumeurs.

Toutefois, les capteurs de fluorescence proposés dans l'art antérieur ont l'inconvénient de localiser difficilement les petites tumeurs et de ne pas permettre une bonne évaluation du gradient de concentration entre tissus sain et tumoral.

En effet, dans les capteurs connus, la lumière d'excitation émise depuis l'extrémité de sortie de la fibre optique d'excitation est partiellement diffractée en irradiant ainsi une zone plus ou moins large du tissu à analyser, et le rayonnement de fluorescence émis par cette zone du tissu est également partiellement collectée par l'extrémité d'entrée de la fibre optique de réception, ce qui entraîne une perte significative du signal de retour à mesurer.

La présente invention a pour but de résoudre les problèmes techniques posés par l'état de la technique mentionné ci-dessus.

Ce but est atteint, selon la présente invention, par le fait qu'un système optique présentant des aberrations chromatiques est disposé devant l'extrémité de sortie de la fibre optique d'excitation et l'extrémité d'entrée de la fibre optique de réception pour optimiser simultanément une focalisation de la lumière d'excitation sur la cible et la réception du rayonnement de fluorescence par la fibre optique de réception.

Dans des formes de réalisation préférées de l'invention, on a recours, en outre, à l'une et/ou à l'autre des dispositions suivantes :
- le système optique est solidaire d'un second support monté mobile par rapport au premier support pour permettre l'éloignement ou le rapprochement dudit système optique vers les fibres optiques d'excitation et de réception ;
- le système optique est formé par une lentille à gradient d'indice de réfraction ;
- la lentille à gradient d'indice de réfraction présente un indice de réfraction qui diminue depuis l'axe optique de l'extrémité de sortie de la fibre optique d'excitation vers l'axe optique de l'extrémité d'entrée de la fibre optique de réception ;
- le premier support comprend un tronçon cylindrique présentant un axe central et dans lequel sont réalisés au moins deux logements traversants destinés à recevoir les extrémités de sortie et d'entrée des deux fibres optiques d'excitation et de réception, les logements traversants étant parallèles à l'axe central ;
- le deuxième support comprend une embase pourvue d'une ouverture traversante dans laquelle est logé le système optique, ladite embase étant, en outre, dotée d'une paroi annulaire recevant le tronçon cylindrique du premier support, la paroi annulaire étant adaptée pour coopérer par vissage avec ledit tronçon cylindrique ;
- la fibre optique d'excitation est disposée suivant l'axe central du premier support, et une pluralité de fibres optiques de réception sont disposées à égale distance autour de la fibre optique d'excitation ;
- les fibres optiques d'excitation et de réception sont fixées dans les logements du premier support par collage ;
- le premier support est en métal.

D'autres caractéristiques et avantages de l'invention apparaîtront au cours de la description qui va suivre d'une de ces formes de réalisation, donnée à titre d'exemple non limitatif, en regard des dessins joints.

Sur les figures :
- la figure 1 représente une vue en coupe schématique en élévation du capteur de fluorescence conforme à l'invention,
- la figure 2 représente une vue détaillée en coupe d'une portion du capteur de fluorescence et
- les figures 3a à 3f représentent des vues en coupe transversale du support sur lequel sont rapportées les fibres optiques d'excitation et de réception du capteur de fluorescence.

Sur les différentes figures, les mêmes références désignent des éléments identiques ou similaires.

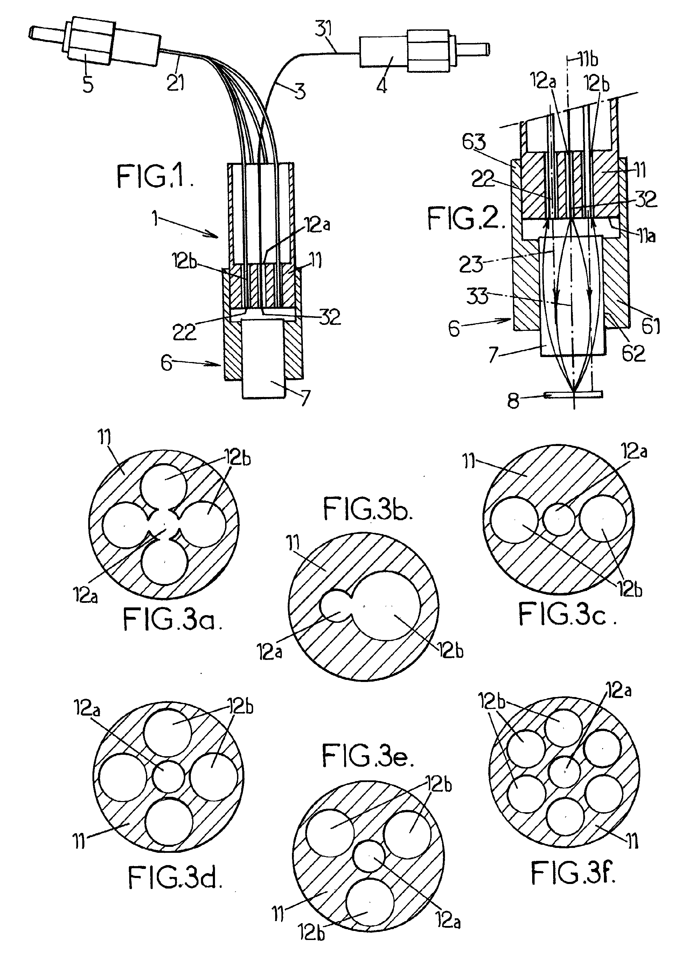

Le capteur de fluorescence représenté sur la figure 1 comprend principalement un premier support 1 sur lequel sont rapportées une pluralité de fibres optiques de réception 2 et au moins une fibre optique d'excitation 3.

La fibre optique d'excitation 3 comprend une extrémité d'entrée 31 reliée à un connecteur 4 destiné à être lui-même connecté à une source lumineuse telle qu'un laser, et une extrémité de sortie 32 solidaire du premier support 1. Cette extrémité de sortie 32 de la fibre optique d'excitation 3 présente un axe optique 33 (figure 2).

Les fibres optiques de réception 2 comprennent, quant à elles, des extrémités de sortie 21 reliées à un connecteur 5 lui-même destiné à être connecté sur des moyens de mesure tels qu'une cellule photoélectrique suivie d'un amplificateur (non représenté), et des extrémités d'entrée 22 solidaires du premier support 1.

Comme on peut le voir sur la figure 2, les différentes extrémités d'entrée 22 des fibres optiques de réception 2 présentent des axes optiques 23 qui sont parallèles à l'axe optique 33 de l'extrémité de sortie 32 de la fibre d'excitation 3.

A cet effet, le premier support 1 comprend un tronçon cylindrique 11, par exemple en métal, dans lequel sont réalisés des logements traversants 12a,12b recevant les extrémités de sortie 32 et d'entrée 22 des fibres optiques d'excitation 3 et de réception 2. Ces différents logements traversants 12a,12b du tronçon cylindrique 11 sont parallèles entre eux et les extrémités 32,22 des fibres optiques d'excitation 3 et de réception 2 sont par exemple fixées dans ces logements traversants 12a,12b par collage.

Comme on peut le voir plus en détail sur la figure 2, les extrémités 22 et 32 des fibres optiques de réception 2 et d'excitation 3 s'étendent jusqu'à la face inférieure 11a du tronçon cylindrique 11.

Le capteur de fluorescence comprend également un deuxième support 6 sur lequel est rapporté un système optique 7 présentant des aberrations chromatiques et qui sera décrit plus en détail dans la suite de la description. Ce deuxième support 6 comprend une embase 61 pourvue d'une ouverture traversante 62 dans laquelle est logé le système optique 7 de telle manière qu'il soit interposé entre les différentes fibres d'excitation et de réception et la cible ou le tissu à analyser 8. L'embase 61 est également dotée d'une paroi annulaire 63 formant un logement pour recevoir le tronçon cylindrique 11 du support 1.

Le système optique 7 conforme à l'invention présente des aberrations chromatiques qui sont destinées, lorsque le système optique est disposé à une distance déterminée des fibres optiques d'excitation 3 et de réception 2, à optimiser la focalisation de la lumière d'excitation sur une cible 8 et la réception du rayonnement de fluorescence par lesdites fibres optiques de réception 2.

Dans l'exemple considéré, le système optique 7 est formé par une lentille à gradient d'indice de réfraction 7 qui présente une forme sensiblement cylindrique et son gradient d'indice de réfraction est déterminé suivant la configuration adoptée pour la disposition des différentes fibres d'excitation 3 et de réception 2. Ainsi, si l'on considère que la fibre optique d'excitation 3 est disposée suivant l'axe central symétrique 11b du tronçon cylindrique 11 et que, d'autre part, les fibres optiques de réception 2 sont disposées à égale distance autour de la fibre optique d'excitation 3, tel que représenté sur les figures 3a, 3d, 3e et 3f, alors l'indice de réfraction de la lentille 7 sera plus élevé en son centre, c'est à dire au niveau de l'axe optique 33 de la fibre optique d'excitation 3 et cet indice de réfraction diminuera progressivement radialement en direction des différents axes optiques 23 des fibres de réception 2. Ainsi, comme représenté sur la figure 2, la lumière d'excitation produite par la source lumineuse telle qu'un laser sera émise tout en étant sensiblement diffractée au niveau de l'extrémité de sortie 32 de la fibre optique d'excitation 3, puis elle sera ensuite focalisée au moyen de la lentille à gradient d'indice de réfraction 7 afin d'obtenir, sur la cible à analyser, un spot d'excitation de petite taille. Simultanément, le rayonnement de fluorescence émis par la cible irradiée 8 est récupéré dans la lentille 7 et collimaté lors de son passage dans la zone à plus faible indice de réfraction de la lentille 7 . Ainsi, une grande partie du rayonnement est envoyée dans les fibres de réception 2, ce qui permet par la suite l'analyse de la quasi totalité du rayonnement fluorescent émis par la cible 8.

Selon une autre caractéristique avantageuse de l'invention, le second support 6 est monté mobile par rapport au premier support 1 afin de permettre l'éloignement ou le rapprochement de la lentille 7 vers les fibres optiques d'excitation 3 et de réception 2. Afin de permettre ce déplacement de la lentille 7 par rapport aux fibres optiques d'excitation 3 et de réception 2, la paroi annulaire 63 présente un taraudage interne qui coopère avec un filetage réalisé sur la face externe du tronçon cylindrique 11. Ainsi, par un simple vissage ou dévissage du support 6, la lentille 7 est déplacée le long de l'axe central 11b du tronçon cylindrique 11 ce qui permet pour chaque détection à effectuer, le réglage de la taille du spot d'excitation venant frapper la cible 8.

Les figures 3a à 3f représentent différentes variantes de réalisation du tronçon cylindrique 11. Sur les figures 3a, 3c, 3d, 3e et 3f, le logement 12a recevant l'extrémité de sortie 32 de la fibre d'excitation 3 est disposé suivant l'axe central 11b du tronçon cylindrique tandis que les logements 12b recevant les extrémités d'entrée 22 des fibres de réception 2 sont disposés à égale distance autour du logement 12a de la fibre d'excitation. Dans ce cas, la lentille 7 qui peut avoir une forme autre qu'une forme cylindrique présentera un indice de réfraction plus élevé en son centre, c'est à dire au niveau de l'axe central 11b du tronçon 11 et cet indice de réfraction diminuera en direction des axes optiques 23 des fibres de réception 2 afin d'assurer la focalisation de la lumière d'excitation sur la cible 8 et une réception optimum du rayonnement de fluorescence par les fibres de réception 2.

Les logements 12b de forme cylindrique peuvent également avoir des diamètres différents suivant les variantes de réalisation du tronçon cylindrique 11 afin de recevoir une ou plusieurs fibres de détection. Ces logements 12b peuvent également communiquer avec le logement 12a de la fibre d'excitation. On comprend également que le logement 12a peut recevoir une ou plusieurs fibres d'excitation 3 suivant la cible à irradier.

Selon une autre variante de réalisation représentée sur la figure 3b, le logement 12a de la fibre d'excitation est excentré par rapport à l'axe central de symétrie 11b du tronçon cylindrique 11. Dans ce cas, la lentille 7 présentera un indice de réfraction plus élevé au niveau de l'axe optique 33 de la fibre d'excitation 3 excentrée et cet indice de réfraction diminuera progressivement en direction de l'axe optique ou des axes optiques 23 des fibres de réception 2.

Bien entendu, le système optique peut également être formé par une bille de verre présentant des aberrations chromatiques entraînant une dispersion focale particulière pour chaque longueur d'onde d'une lumière d'excitation polychromatique. Ainsi, la bille de verre peut être, par exemple, placée à une distance déterminée en fonction des aberrations chromatiques du verre de ladite bille afin de focaliser par exemple le rayonnement bleu de la lumière d'excitation sur la cible 8 pour optimiser le rayonnement de fluorescence de certaines cellules organiques à détecter et permettre une réception optimale du rayonnement de fluorescence par les fibres optiques de réception 2.

## Revendications

1. Capteur de fluorescence comprenant:
- au moins une fibre optique d'excitation (3) pour transmettre une lumière d'excitation produite par une source lumineuse afin d'exciter la fluorescence d'une cible appropriée (8), ladite fibre optique d'excitation (3) comprenant une extrémité de sortie (32) qui présente un certain axe optique (33) et qui est solidaire d'un premier support (1), et
- au moins une fibre optique de réception (2) pour recevoir un rayonnement de fluorescence émis par la cible irradiée (8), ladite fibre optique de réception (2) comprenant une extrémité d'entrée (22) qui présente un axe optique (23) parallèle à l'axe optique (33) de l'extrémité de sortie (32) de la fibre optique d'excitation (3) et qui est solidaire dudit premier support (1),
**caractérisé en ce qu'**un système optique (7) présentant des aberrations chromatiques est disposé devant l'extrémité de sortie (32) de la fibre optique d'excitation (3) et l'extrémité d'entrée (22) de la fibre optique de réception (2) pour optimiser simultanément une focalisation de la lumière d'excitation sur la cible (8) et la réception du rayonnement de fluorescence par la fibre optique de réception (2).

2. Capteur selon la revendication 1, dans lequel le système optique (7) est solidaire d'un second support (6) monté mobile par rapport au premier support (1) pour permettre l'éloignement ou le rapprochement dudit système optique (7) vers les fibres optiques d'excitation (3) et de réception (2).

3. Capteur selon l'une ou l'autre des revendications 1 et 2, dans lequel le système optique (7) est formé par une lentille à gradient d'indice de réfraction.

4. Capteur selon la revendication 3, dans lequel la lentille (7) à gradient d'indice de réfraction présente un indice de réfraction qui diminue depuis l'axe optique (33) de l'extrémité de sortie (32) de la fibre optique d'excitation (3) vers l'axe optique (23) de l'extrémité d'entrée (22) de la fibre optique de réception (2).

5. Capteur selon l'une quelconque des revendications précédentes, dans lequel le premier support (1) comprend un tronçon cylindrique (11) présentant un axe central (11b) et dans lequel sont réalisés au moins deux logements traversants (12a,12b) destinés à recevoir les extrémités de sortie (32) et d'entrée (22) des deux fibres optiques d'excitation (3) et de réception (2), les logements traversants (12a,12b) étant parallèles à l'axe central (11b).

6. Capteur selon la revendication 5, dans lequel le deuxième support (6) comprend une embase (61) pourvue d'une ouverture traversante (62) dans laquelle est logé le système optique (7), ladite embase (61) étant, en outre, dotée d'une paroi annulaire (63) recevant le tronçon cylindrique (11) du premier support (1), la paroi annulaire (63) étant adaptée pour coopérer par vissage avec ledit tronçon cylindrique (11).

7. Capteur selon l'une ou l'autre des revendications 5 et 6, dans lequel la fibre optique d'excitation (3) est disposée suivant l'axe central (11b) du premier support (1), et une pluralité de fibres optiques de réception sont disposées à égale distance autour de la fibre optique (2) d'excitation (3).

8. Capteur selon l'une quelconque des revendications 5 à 7, dans lequel les fibres optiques d'excitation (3) et de réception (2) sont fixées dans les logements (12a,12b) du premier support (1) par collage.

9. Capteur selon l'une quelconque des revendications précédentes, dans lequel le premier support (1) est en métal
